# FASCICULE DE BREVET EUROPEEN

(11) **EP 2 088 579 B1**
(45) Date de publication et mention de la délivrance du brevet: **18.08.2010**
(21) Numéro de dépôt: 09354002.9
(22) Date de dépôt: 16.01.2009
(51) Int. Cl.: G10K 5/00, F16G 11/10

(54) **Elément d'attache équipé d'un sifflet**
Befestigungselement, das mit einer Pfeife ausgestattet ist
Attachment element equipped with a whistle

(30) Priorité: 06.02.2008 FR 0800612
(43) Date de publication de la demande: 12.08.2009
(73) Titulaire: Zedel, 38920 Crolles (FR)
(72) Inventeur: Petzl, Paul, 38530 Barraux (FR); Huguenin, Stéphane, 38000 Grenoble (FR); Florès, Nicolas, 38130 Echirolles (FR)
(74) Mandataire: Hecké, Gérard

(56) Documents cités:
- WO-A-01/78545
- CA-A1- 2 301 784
- GB-A- 2 277 351

## Description

### Domaine technique de l'invention

L'invention est relative à un dispositif d'attache associé à un sifflet et comprenant un dispositif de serrage d'un moyen de liaison souple, et un bouton de déverrouillage pour débloquer ledit moyen de liaison, l'ensemble étant logé dans un corps creux en matière plastique.

### État de la technique

Le dispositif GB 2277351 se rapporte à un élément d'attache à sifflet juxtaposé, lequel comprend un dispositif de serrage d'une cordelette, et un bouton de déverrouillage pour débloquer la cordelette.

Le document WO 01/78545 concerne une boucle d'attache pour un sac à dos, composé d'une paire d'organes de fixation par encliquetage équipés de passants de sangle, et d'un sifflet prévu dans le corps de l'un des organes. Le moulage par injection d'une telle boucle est compliqué et nécessite plusieurs moules.

### Objet de l'invention

L'objet de l'invention consiste à réaliser un élément d'attache à sifflet intégré facile à fabriquer et à monter.

Le dispositif selon l'invention est caractérisé en ce que le corps creux est moulé par injection en une seule pièce en étant subdivisé en un premier compartiment renfermant le sifflet, et en un deuxième compartiment de logement du bouton de déverrouillage et d'une mâchoire de blocage, laquelle est composée d'une première face de coincement solidaire du bouton de déverrouillage mobile et d'une deuxième face de coincement fixe venant de moulage avec le corps, ladite pièce étant moulée ouverte grâce à un clapet relié au corps du premier compartiment par une charnière.

L'usage du clapet à charnière permet d'obtenir le volume fermé nécessaire à la constitution d'un sifflet tout en injectant une pièce monobloc.

Selon un mode de réalisation préférentiel, le sifflet comporte un évent d'échappement, et un bec de soufflage en communication dans le premier compartiment avec une caisse de résonance formée après fermeture du clapet. Un ressort est intercalé entre le bouton de déverrouillage et le corps pour solliciter la première face de coincement vers la deuxième face de coincement fixe de la mâchoire de blocage. Le bouton de déverrouillage est doté d'un moyen de retenue destiné à s'encliqueter sur le corps en position insérée dans le deuxième compartiment.

Le moyen de liaison peut être formé par une sangle, un élastique ou une cordelette.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en perspective de l'élément d'attache à sifflet selon l'invention, la sangle de liaison étant insérée dans le dispositif de serrage ;
- la figure 2 montre une vue identique de la figure 1 après retournement de l'élément d'attache ;
- la figure 3 représente une vue en coupe verticale de la figure 2 ;
- la figure 4 est une vue en coupe selon la ligne 4-4 de la figure 3 ;
- la figure 5 montre schématiquement le dispositif de moulage de la pièce monobloc du corps de l'élément d'attache ;
- la figure 6 représente le corps après démoulage et en position d'ouverture du clapet;
- la figure 7 est une vue identique de la figure 6 après fermeture du clapet.

### Description détaillée de l'invention

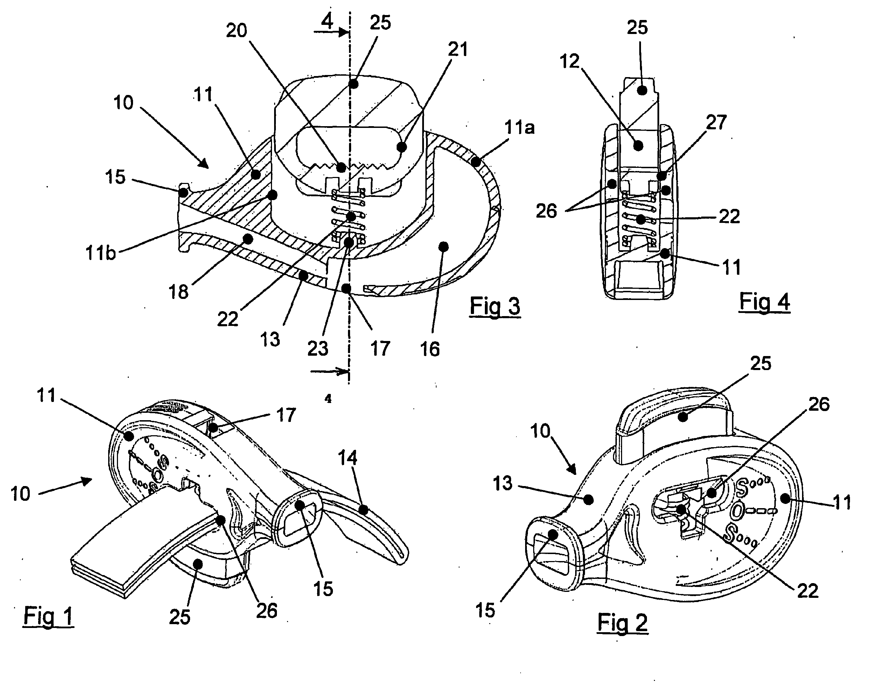

En référence aux figures 1 à 4, un élément d'attache 10 comprend un corps 11 creux en matière plastique moulée, comportant un dispositif de serrage 12 du type tanka, et un sifflet 13.

Le dispositif de serrage 12 sert à retenir un moyen de liaison 14 souple constitué par une bandelette de tissu élastique, une sangle, ou une cordelette, et destinée à être reliée à un objet quelconque, notamment une lampe portative, un sac, une poignée de bâtons de ski, un bonnet, etc....

Le sifflet 13 est agencé dans un premier compartiment 11a du corps 11, et est composé d'un bec 15 de soufflage, d'une caisse de résonance 16 et d'un évent 17 d'échappement. Le bec 15 de soufflage communique avec la caisse de résonance 16 à travers un canal 18 interne.

Le corps 11 renferme un deuxième compartiment 11 b à l'intérieur duquel est logé un bouton de déverrouillage 25 du tanka. Il comporte une mâchoire 19 de blocage composée d'une première surface de coincement 20 crantée s'étendant le long d'une ouverture 21 oblongue ménagée dans le bouton 25, et d'un ressort 22 de compression intercalé entre le bouton 25 et un plot 23 fixe. Le ressort 22 sollicite la première surface de coincement 20 vers une deuxième surface de coincement 24 fixe du corps 11 de manière à retenir le moyen de liaison 14. La partie externe du bouton de déverrouillage 25 fait saillie du corps 11 sous l'action de rappel du ressort 22, et il suffit d'exercer une action de poussée pour libérer le moyen de liaison 14.

Les deux surfaces de coincement 20, 24 peuvent être lisses ou crantées.

L'évent 17 du sifflet 13 est situé à l'opposé du bouton de déverrouillage 25 du tanka, et les faces latérales du corps 11 sont équipées d'une paire de fentes 26 alignées permettant l'introduction du moyen de liaison 14 souple, lequel peut également traverser l'ouverture 21 de la mâchoire 19 lorsqu'une pression est exercée sur le bouton de déverrouillage 25 à l'encontre de la force de rappel du ressort 22.

Le bouton de déverrouillage 25 est doté en plus d'une dent de retenue 27 destinée à s'encliqueter sur un rebord de l'une des fentes 26 du corps 11 pour le maintien du bouton dans le deuxième compartiment 11 b.

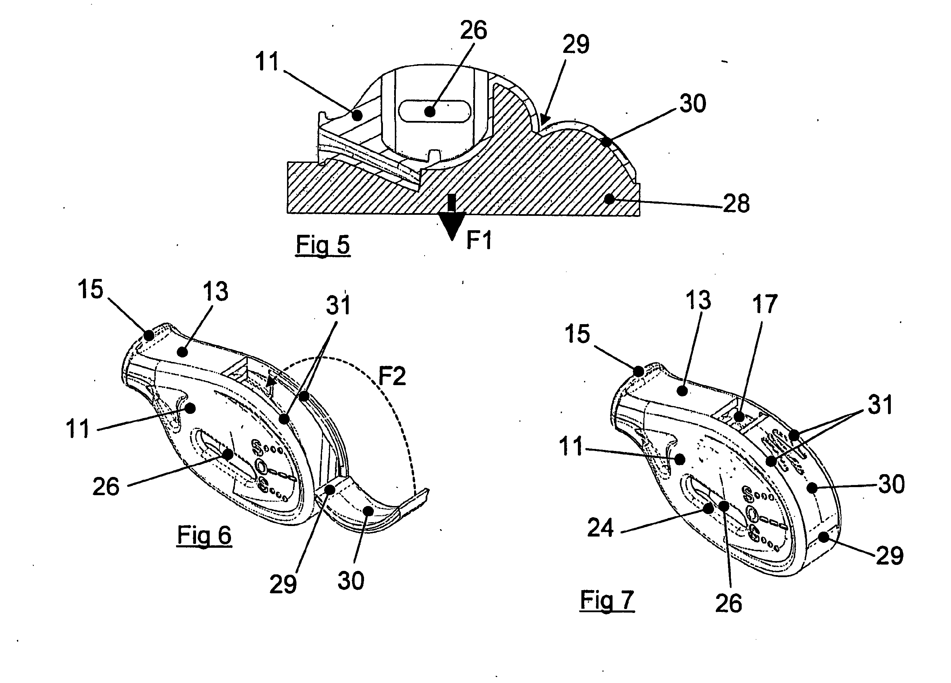

Sur les figures 5 à 7, le corps 11 creux en plastique de l'élément d'attache 10 est moulé par injection en une seule pièce avec les deux compartiments 11a, 11b renfermant respectivement le sifflet 13 et la deuxième surface de coincement 24 fixe de la mâchoire 19 de blocage. Le moule 28 est représenté schématiquement sur la figure 5, avec le sens de démoulage F1 permettant d'obtenir la pièce avec un clapet 30 relié par une charnière 29 au corps 11. Dans la figure 6, le clapet 30 est ouvert après démoulage, et il suffit ensuite de le fermer par pivotement dans le sens de la flèche F2 pour obtenir l'évent 17 du sifflet (figure 7). Des clips 31 sont prévus sur le corps 11 pour retenir le clapet 30 en position fermée.

La pièce plastique avec charnière 29 est moulée ouverte, puis fermée par basculement du clapet 30. L'utilisation de cette charnière 29 permet d'obtenir un volume fermé tout en injectant une pièce monobloc.

Il suffit ensuite d'insérer le bouton de déverrouillage 25 avec son ressort 22 dans le deuxième compartiment 11 b après avoir positionné préalablement le ressort 22 sur le plot 23 fixe du corps 11. En fin de course d'insertion, la dent de retenue 27 s'emboîte par encliquetage sur un rebord de l'une des fentes 26 du corps 11 pour maintenir le bouton 25 en place. Il est alors possible d'introduire transversalement la sangle de liaison 14 dans les fentes 26 et l'ouverture 21 en appuyant simultanément sur le bouton de déverrouillage 25 du tanka. Après relâchement, la sangle 14 est serrée automatiquement par la mâchoire 19 de blocage.

Le sifflet 13 est accessible à tout moment, et reste imperdable grâce à la sangle 19 reliée en permanence à l'objet.

## Revendications

1. Elément d'attache (10) à sifflet (13) comprenant un dispositif de serrage (12) d'un moyen de liaison (14) souple, et un bouton de déverrouillage (25) pour débloquer ledit moyen de liaison, l'ensemble étant logé dans un corps (11) creux en matière plastique,
**caractérisé en ce que** le corps (11) creux est moulé par injection en une seule pièce en étant subdivisé en un premier compartiment (11a) renfermant le sifflet (13), et en un deuxième compartiment (11b) de logement du bouton de déverrouillage (25) et d'une mâchoire (19) de blocage, laquelle est composée d'une première face de coincement (20) solidaire du bouton de déverrouillage (25) mobile et d'une deuxième face de coincement (24) fixe venant de moulage avec le corps (11), ladite pièce étant moulée ouverte grâce à un clapet (30) relié au corps (11) du premier compartiment (11 a) par une charnière (29).

2. Elément d'attache selon la revendication 1, **caractérisé en ce que** le sifflet (13) comporte un bec de soufflage (15) en communication dans le premier compartiment (11a) avec une caisse de résonance (16) formée après fermeture du clapet (30).

3. Elément d'attache selon la revendication 2, **caractérisé en ce que** le sifflet (13) comprend un évent (17) d'échappement agencé dans le premier compartiment (11 a) après fermeture du clapet (30).

4. Elément d'attache selon la revendication 1, **caractérisé en ce qu'**un ressort (22) est intercalé entre le bouton de déverrouillage (25) et le corps (11) pour solliciter la première face de coincement (20) vers la deuxième face de coincement (24) fixe de la mâchoire (19) de blocage.

5. Elément d'attache selon l'une des revendications précédentes, **caractérisé en ce que** l'évent (17) du sifflet (13) est situé à l'opposé du bouton de déverrouillage (25).

6. Elément d'attache selon l'une des revendications précédentes, **caractérisé en ce que** le bouton de déverrouillage (25) est doté d'un moyen de retenue (27) destiné à s'encliqueter sur le corps (11) en position insérée dans le deuxième compartiment (11b).

7. Elément d'attache selon l'une des revendications précédentes, **caractérisé en ce que** les faces latérales du corps (11) sont équipées d'une paire de fentes (26) alignées avec la mâchoire (19) lors d'une pression exercée sur le bouton de déverrouillage (25).

8. Elément d'attache selon l'une des revendications précédentes, **caractérisé en ce que** le moyen de liaison (14) est formé par une sangle, un élastique ou une cordelette.

9. Elément d'attache selon l'une des revendications précédentes, **caractérisé en ce que** les première et deuxième faces de coincement (20, 24) peuvent être lisses ou crantées.

## Claims

1. An attachment device (10) with a whistle (13) comprising a securing device (12) of a flexible joining means (14) and a release button (25) to release said joining means, the assembly being housed in a hollow body (11) made from plastic material,
**characterized in that** the hollow body (11) is injection molded in a single part being subdivided into a first compartment (11a) housing the whistle (13) and a second compartment (11b) housing the release button (25) and a securing jaw (19) which is composed of a first jamming surface (20) integral to the movable release button (25) and a fixed second jamming surface (24) molded together with the body (11), said part being open molded by means of a stop valve (30) joined to the body (11) of the first compartment (11a) by a hinge (29).

2. The attachment device according to claim 1, **characterized in that** the whistle (13) comprises a mouthpiece (15) communicating in the first compartment (11a) with a resonating chamber (16) formed after the stop valve (30) has been closed.

3. The attachment device according to claim 2, **characterized in that** the whistle (13) comprises an outlet vent (17) arranged in the first compartment (11a) after the stop valve (30) has been closed.

4. The attachment device according to claim 1, **characterized in that** a spring (22) is inserted between the release button (25) and the body (11) to bias the first jamming surface (20) towards the fixed second jamming surface (24) of the securing jaw (19).

5. The attachment device according to one of the previous claims, **characterized in that** the vent (17) of the whistle (13) is situated opposite the release button (25).

6. The attachment device according to one of the previous claims, **characterized in that** the release button (25) is equipped with a securing means (27) designed to clip onto the body (11) in the inserted position in the second compartment (11 b).

7. The attachment device according to one of the previous claims, **characterized in that** the side faces of the body (11) are equipped with a pair of slots (26) aligned with the jaw (19) when a pressure is exerted on the release button (25).

8. The attachment device according to one of the previous claims, **characterized in that** the joining means (14) are formed by a strap, an elastic strip or a cord.

9. The attachment device according to one of the previous claims, **characterized in that** the first and second jamming surfaces (20, 24) can be smooth or notched.

## Patentansprüche

1. Befestigungselement (10), das mit einer Pfeife (13) ausgestattet ist und eine Vorrichtung zum Festziehen (12) für eine biegsame Verbindungsvorrichtung (14) sowie einen Entriegelungsknopf (25) zum Entriegeln der genannten Verbindungsvorrichtung umfasst, wobei diese Teile alle in einem Hohlkörper (11) aus Kunststoff untergebracht sind,
**dadurch gekennzeichnet, dass** der Hohlkörper (11) durch Spritzguss in einem Stück hergestellt ist, wobei er in ein erstes Fach (11a), das die Pfeife (13) einschließt, und ein zweites Fach (11b) unterteilt ist, das den Entriegelungsknopf (25) und eine Blockierungsbacke (19) aufnimmt, die von einer ersten Einklemmseite (20), die fest mit dem beweglichen Entriegelungsknopf (25) verbunden ist, und einer zweiten, festen Einklemmseite (24) gebildet wird, die fest an den Körper (11) angegossen Ist, wobei das genannte Teil offen spritzgegossen ist durch eine Klappe (30), die mit dem Körper (11) des ersten Fachs (11a) durch ein Scharnier (29) verbunden ist.

2. Befestigungselement nach Anspruch 1, **dadurch gekennzeichnet, dass** die Pfeife (13) eine Pfeifnase (15) umfasst, die im ersten Fach (11a) mit einem Resonanzkasten (16) verbunden ist, der nach dem Schließen der Klappe (30) entsteht.

3. Befestigungselement nach Anspruch 2, **dadurch gekennzeichnet, dass** die Pfeife (13) eine Austrittsöffnung (17) umfasst, die im ersten Fach (11a) nach dem Schließen der Klappe (30) entsteht.

4. Befestigungselement nach Anspruch 1, **dadurch gekennzeichnet, dass** eine Feder (22) zwischen dem Entriegelungsknopf (25) und dem Körper (11) angeordnet ist, um die erste Einklemmseite (20) zur zweiten festen Einklemmseite (24) der Blockierungsbacke (19) zu ziehen.

5. Befestigungselement nach einem der vorstehenden Ansprüche, **dadurch gekennzeichnet, dass** die Austrittsöffnung (17) der Pfeife (13) auf der entgegengesetzten Seite zum Entriegelungsknopf (25) angeordnet ist.

6. Befestigungselement nach einem der vorstehenden Ansprüche, **dadurch gekennzeichnet, dass** der Entriegelungsknopf (25) mit einer Rückhaltevorrichtung (27) versehen ist, die dazu bestimmt ist, in der in das zweite Fach (11b) eingezogenen Position am Körper (11) einzurasten.

7. Befestigungselement nach einem der vorstehenden Ansprüche, **dadurch gekennzeichnet, dass** die Seitenflächen des Körpers (11) mit zwei Schlitzen (26) versehen sind, die sich bei einem auf den Entriegelungsknopf (25) ausgeübten Druck mit der Backe (19) gefluchtet sind.

8. Befestigungselement nach einem der vorstehenden Ansprüche, **dadurch gekennzeichnet, dass** die Verbindungsvorrichtung (14) von einem Riemen, einem Gummiband oder einer Kordel gebildet wird.

9. Befestigungselement nach einem der vorstehenden Ansprüche, **dadurch gekennzeichnet, dass** die erste und zweite Einklemmseite (20, 24) glatt oder formgezahnt sein können.
